(19) Europäisches Patentamt
European Patent Office
Office européen des brevets

(11) Numéro de publication : **0 453 380 A1**

# (12) DEMANDE DE BREVET EUROPEEN

(21) Numéro de dépôt : **91420122.3**

(22) Date de dépôt : **09.04.91**

(51) Int. Cl.[5] : **C08K 13/02,** C08L 57/08, // (C08K13/02, 3:26, 5:09, 5:57)

(30) Priorité : **20.04.90 FR 9005296**

(43) Date de publication de la demande : **23.10.91 Bulletin 91/43**

(84) Etats contractants désignés : **AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Carette, Louis**
**64, rue de l'Egalité, Résidence Rodin - Appt 1411**
**F-92130 Issy les Moulineaux (FR)**
Inventeur : **Gay, Michel**
**10, rue Rolland**
**F-69100 Villeurbanne (FR)**
Inventeur : **Velleret, Gérard**
**65 avenue Philippe Auguste**
**F-75011 Paris (FR)**

(74) Mandataire : **Vignally, Noel et al**
**Rhône-Poulenc Chimie Service Brevets Chimie Centre de Recherches des Carrières**
**B.P. 62**
**F-69192 Saint-Fons Cédex (FR)**

## (54) Compositions stabilisées de polymère halogène.

(57) La présente invention concerne de nouvelles compositions stabilisées à base de polymère halogéné et plus spécifiquement de polymère chloré.

Plus précisément la présente invention consiste en des compositions stabilisées à base de polymère chloré, caractérisées en ce qu'elles contiennent :

a) une quantité efficace de dawsonite,
b) une quantité efficace d'un β-dicétonate d'organo étain
c) une quantité efficace d'un composé organique du zinc,
d) une quantité efficace d'un composé organique du calcium, du magnésium, du baryum ou de lanthanides.

Elle permet la diminution du taux d'huiles époxydées, tout en conservant aux compositions polymériques la stabilité thermique des compositions contenant un taux plus élevé de ces huiles époxydées.

EP 0 453 380 A1

La présente invention concerne de nouvelles compositions stabilisées à base de polymère halogéné et plus spécifiquement de polymère chloré.

Parmi les polymères chlorés, le polychlorure de vinyle (PVC) est le plus employé.

Selon les applications envisagées, la stabilisation thermique lors de sa mise en forme ou lors de l'utilisation des produits conformes est réalisée de diverses manières.

Le brevet FR-A-2 297 227 décrit des compositions de PVC stabilisées de manière efficace par des sels organiques métalliques tels que notamment des sels de zinc, de calcium et de baryum et une β-dicétone.

Ces compositions comportent également des additifs usuels tels que des huiles époxydées, des lubrifiants, des plastifiants ou des renforçateurs de choc.

Pour certaines applications, particulièrement celles pour lesquelles le polymère chloré doit être peu ou pas plastifié, la présence habituelle de quantités relativement importantes d'huile époxydée telle que l'huile de soja époxydée ou l'huile de lin époxydée entraînent une baisse du point de ramollissement du polymère.

Or la suppression ou la diminution notable de ces huiles époxydées diminue la stabilité thermique des compositions.

Cela se traduit, lors de la mise en forme à chaud des compositions, par un jaunissement important du polymère, ce qui est incacceptable pour des applications nécessitant une transparence et un aspect incolore ou faiblement chloré de l'objet conformé, comme par exemple dans le cas des récipients en PVC.

La présente invention se propose de résoudre ce problème en permettant la diminution du taux d'huiles époxydées, tout en conservant aux compositions polymériques la stabilité thermique des compositions contenant un taux plus élevé de ces huiles époxydées.

Plus précisément la présente invention consiste en des compositions stabilisées à base de polymère chloré, caractérisées en ce qu'elles contiennent :

a) une quantité efficace de dawsonite,

b) une quantité efficace d'un β-dicétonate d'organo étain

c) une quantité efficace d'un composé organique du zinc,

d) une quantité efficace d'un composé organique du calcium, du magnésium, du baryum ou de lanthanides.

Les polymères chlorés sont notamment le polychlorure de vinyle (PVC), le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

De manière générale tout type de PVC convient, quel que soit son mode de préparation : polymérisation en masse, en suspension, en dispersion ou de tout autre type et quelle que soit sa viscosité intrinsèque.

Les homopolymères du chlorure de vinyle peuvent également être modifiés chimiquement, par exemple par chloration.

De nombreux copolymères du chlorure de vinyle peuvent également être stabilisés contre les effets de la chaleur, c'est-à-dire le jaunissement et la dégradation. Ce sont en particulier les copolymères obtenus par copolymérisation du chlorure de vinyle avec d'autres monomères présentant une liaison éthylénique polymérisable, comme par exemple l'acétate de vinyle ou le chlorure de vinylidène ; les acides maléique ou fumarique ou leurs esters ; les oléfines telles que l'éthylène, le propylène, l'hexène ; les esters acryliques ou méthacryliques ; le styrène ; les éthers vinyliques tels que le vinyldodécyléther.

Habituellement ces copolymères contiennent au moins 50 % en poids de motifs chlorure de vinyle et de préférence au moins 80 % en poids de motifs chlorure de vinyle.

Les compositions selon l'invention peuvent également contenir des mélanges à base de polymère chloré contenant des quantités minoritaires d'autres polymères, comme les polyoléfines halogénées ou les copolymères acrylonitrile-butadiène-styrène.

Le PVC seul ou en mélange avec d'autres polymères est le polymère chloré le plus largement utilisé dans les compositions de l'invention.

Le terme β-dicétonate d'organo-étain englobe les dérivés de diorgano-étain des β-dicétones, des poly β-dicétones, ainsi que des β-cétoaldéhydes, aromatiques, arylaliphatiques, aliphatiques et cycliques.

Ce sont plus particulièrement les β-dicétonates de dialkylétain IV, les 2 radicaux alkyles, identiques ou différents, étant linéaires ou ramifiés et ayant de 1 à 12 atomes de carbone.

On peut indiquer notamment les dérivés de dialkylétain IV des composés β-dicétoniques décrits dans les brevets ou certificats d'addition FR-A-2 292 227, FR-A-2 324 681, FR 2 351 149, FR-A-2 352 025, FR-A-2 383 988 et FR-A-2 456 132 et dans les brevets européens EP 0 040 286 et EP 0 046 161.

Comme exemples non limitatifs de tels β-dicétonates de dialkylétain IV, on peut citer les dérivés de diméthylétain IV, de dibutylétain IV et de dioctylétain IV du benzoylstéaroylméthane, du dibenzoylméthane, de la benzoylacétone, du benzoyl méthyl-3 butanoylméthane, des méthoxycarbonylbenzoyl-benzoylméthanes, des bis-β-dicétones telles que le bis(acétylacéto)-1,4 butane, le bis(benzoylacéto)-1,8 octane, le bis(acétylacéto)1,4 benzène.

Il est également possible d'associer au β-dicétonate d'organo étain une β-dicétone libre, telle que celles dont dérivent les β-dicétonates d'organo-étain cités précédemment. De manière pratique, ce peut-être la β-dicétone libre correspondant au β-dicétonate d'organo étain utilisé.

Généralement les compositions selon l'invention comportent de 0,005 % à 5 % en poids de β-dicétonate d'organo étain et éventuellement de β-dicétone libre, par rapport au poids du polymère chloré et de préférence de 0,01% à 2% en poids par poids.

Les composés organiques du zinc sont plus particulièrement les carboxylates et les phénolates de zinc.

Les plus couramment utilisés sont par exemple les sels de zinc des acides maléique, acétique, diacétique, propionique, hexanoïque, éthyl-2 hexanoïque, décanoïque, undécanoïque, laurique, myristique, palmitique, stéarique, oléïque, ricinoléïque, béhénique, hydroxystéarique, hydroxyundécanoïque, benzoïque, phénylacétique, paratertiobutylbenzoïque et salicylique ; les phénolates de zinc du phénol et des phénols substitués par un ou plusieurs radicaux alkyle, tels que les nonylphénols.

Pour des raisons pratiques ou pour des raisons économiques, on choisit de préférence parmi les composés organiques du zinc cités précédemment, le propionate de zinc, l'éthyl-2 hexanoate de zinc, le laurate de zinc, le stéarate de zinc, l'oléate de zinc, le ricinoléate de zinc, le benzoate de zinc, le paratertiobutylbenzoate de zinc, le salicylate de zinc, le maléate de zinc et de mono(éthyl-2 hexyle), les nonylphénates de zinc.

Généralement les composés organiques du zinc représentent de 0,005 % à 1 % en poids par rapport au polymère chloré, et de préférence de 0,01 % à 0,6 % en poids.

Les composés organiques du calcium, du magnésium, du baryum et des lanthanides sont de préférence les carboxylates et les phénolates de ces métaux.

Les plus couramment utilisés sont par exemple les sels de calcium, de magnésium, de baryum et de lanthanides des acides maléique, acétique, diacétique, propionique, hexanoïque, éthyl-2 hexanoïque, décanoïque, undécanoïque, laurique, myristique, palmitique, stéarique, oléïque, ricinoléique, béhénique, hydroxystéarique, hydroxyundécanoïque, benzoïque, phénylacétique, paratertiobutylbenzoïque et salicylique ; les phénolates de calcium, de magnésium, de baryum et de lanthanides du phénol et des phénols substitués par un ou plusieurs radicaux alkyle, tels que les nonylphénols.

Pour des raisons pratiques ou pour des raisons économiques, on choisit de préférence parmi les composés organiques de calcium, de magnésium, de baryum et de lanthanides cités précédemment, les sels des acides propionique, éthyl-2 hexanoïque, laurique, stéarique, oléïque, ricinoléïque, benzoïque, paratertiobutylbenzoïque, salicylique, du maléate de mono(éthyl-2 hexyle) ainsi que les nonylphénates de ces métaux.

Généralement les composés organiques du calcium, du magnésium, du baryum et des lanthanides représentent de 0,005 % à 5 % en poids par rapport au poids du polymère chloré et de préférence de 0,02 % à 2 % en poids.

Pour les applications alimentaires et notamment pour les bouteilles en PVC, on utilisera les composés organiques du calcium ou les mélanges composés organiques du calcium/composés organiques du magnésium.

La dawsonite est un carbonate basique d'aluminium et de sodium. C'est un carbonate cristallin monoclinique que l'on représente généralement sous la formule $NaAl(OH)_2CO_3$, sans que cette représentation soit nécessairement la seule possible.

On peut se référer aux ouvrages généraux de chimie minérale comme par exemple le "NOUVEAU TRAITE DE CHIMIE MINERALE, TOME II, de P. PASCAL".

Généralement les compositions selon l'invention contiennent de 0,005 % à 5 % en poids de dawsonite par rapport au poids du polymère chloré et préférentiellement de 0,01 % à 2 % en poids.

Les compositions selon l'invention présentent une stabilité thermique, notamment lors de leur mise en forme, essentiellement équivalente à des compositions similaires contenant de l'huile de soja époxydée en quantité plus importante, ainsi qu'un caractère lubrifiant similaire, alors qu'elles présentent un indice de viscosité plus élevé.

Dans les compositions à base de polymère chloré de l'invention, il est naturellement possible d'introduire également d'autres additifs.

On peut ainsi ajouter efficacement une huile polyorganosiloxanique γ-hydroxy-alkylée de formule générale (I)

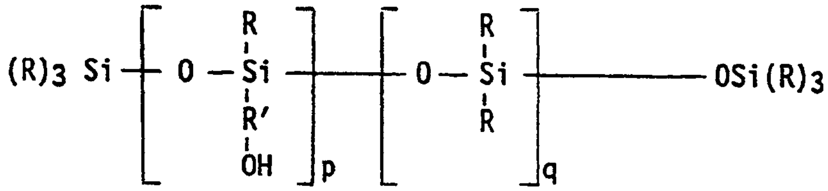 (I)

dans laquelle :

– les radicaux R, identiques ou différents, représentent un radical méthyle ou phényle, 60 % en moles au moins de radicaux R étant des radicaux méthyle,
– R′ représente un radical alkylène, linéaire ou ramifié, ayant 2 à 6 atomes de carbone,
– p représente un nombre moyen de 1 à 30,
– q représente un nombre moyen de 1 à 100.

Parmi les huiles polyorganosiloxaniques, on préfère dans la présente invention les huiles de formule (I) dans laquelle :

– R représente un radical méthyle ;
– R′ représente un radical triméthylène ou méthyl-2 triméthylène ;
– p représente un nombre moyen de 2 à 20 ;
– q représente un nombre moyen de 2 à 30.

Généralement les huiles polyorganosiloxaniques représentent de 0,005 % à 5 % en poids par rapport au poids du polymère chloré, et de préférence de 0,01 % à 2 % en poids.

Les compositions de l'invention peuvent aussi comporter d'autres stabilisants thermiques secondaires tels que les polyols et les phosphites.

Les polyols ont généralement l'avantage d'allonger la durée de vie des polymères chlorés soumis à un traitement thermique.

Généralement il est préférable que les polyols utilisés aient un point d'ébullition supérieur à 150°C et de préférence supérieur à 170°C, à cause de la mise en oeuvre à température élevée des polymères chlorés.

A titre d'exemples de tels polyols on peut citer des triols comme le triméthylolpropane, le glycérol, l'hexanetriol-1,2,6, le butanetriol-1,2,4, le trishydroxyéthylisocyanurate ; des tétrols comme le pentaérythritol, le diglycérol ; des pentitols comme le xylitol, le tétraméthylolcyclohexanol ; des hexitols comme le mannitol, le sorbitol, le dipentaérythritol ; des polyols partiellement estérifiés par un acide carboxylique et dans la formule desquels au moins 3 fonctions hydroxyle sont libres ; des alcools polyvinyliques, notamment ceux dans lesquels il reste moins de 30 % en moles de groupes esters par rapport à l'ensemble de leurs groupes esters et hydroxyle.

Parmi ces polyols les préférés sont le xylitol, le mannitol, le sorbitol, le tétraméthylolcyclohexanol et les alcools polyvinyliques définis précédemment.

Lorsqu'il est présent dans les compositions selon l'invention, on utilise en général de 0,005 % à 1 % en poids de polyol par rapport au polymère chloré et de préférence de 0,01 % à 0,6 % en poids.

Les compositions selon l'invention peuvent comporter également des phosphites organiques, notamment des phosphites aliphatiques ou des phosphites aromatiques ou des phosphites mixtes aliphatiques et aromatiques.

Lorsqu'il est présent, le phosphite représente généralement de 0,05 % à 5 % en poids par rapport au polymère chloré et de préférence de 0,1 % à 2 % en poids.

Les compositions selon l'invention peuvent également comporter des adjuvants habituels tels que des antioxydants phénoliques ; des agents anti-UV tels que les benzophénones, les benzotriazoles ou les amines stériquement encombrées (habituellement connues sous le terme de HALS).

Les compositions de l'invention peuvent aussi comporter des époxydes, notamment des polyglycérides époxydés comme l'huile de soja époxydée, l'huile de lin époxydée, les huiles de poissons époxydées ou la talloil époxydée.

Mais pour éviter une diminution de l'indice de viscosité du polymère chloré, on utilise généralement le moins possible de telles huiles, selon l'emploi envisagé pour les compositions.

Habituellement lorsqu'ils sont présents, les époxydes représentent de 0,05 % à 5 % en poids par rapport au poids du polymère chloré et plus spécifiquement de 0,1 % à 2 % en poids.

Les compositions de l'invention sont généralement des formulations rigides, c'est-à-dire sans plastifiant ou semi-rigides, c'est-à-dire avec des teneurs en plastifiant réduites, telles que pour les applications dans le bâtiment ou pour la fabrication de bouteilles. Mais les compositions selon l'invention peuvent également être utilisées dans des formulations plastifiées telles que pour la fabrication de films à usage agricole.

De manière habituelle, l'incorporation des différents stabilisants ou adjuvants est faite sur le polymère

chloré à l'état de poudre.

On peut bien entendu préparer un mélange de 2 ou plusieurs des composés constitutifs des compositions selon l'invention avant leur incorporation dans le polymère chloré.

Toutes les méthodes usuelles d'incorporation des différents stabilisants ou adjuvants dans le polymère peuvent être utilisées. Par exemple l'homogénéisation de la composition polymérique peut être réalisée sur malaxeur ou mélangeur à rouleaux, à une température telle que la composition devienne fluide, normalement entre 150°C et 200°C pour le PVC et pendant une durée suffisante, de l'ordre de quelques minutes à quelques dizaines de minutes.

Les compositions de polymère chloré, et plus particulièrement de PVC, peuvent être mises en oeuvre selon toutes les techniques utilisées habituellement comme par exemple l'extrusion, l'injection, l'extrusion-soufflage, le calandrage ou le moulage par rotation.

Les exemples qui suivent illustrent l'invention.

EXEMPLE 1

On prépare les formulations A, B, C, D, E et E'(essai comparatif) qui sont détaillées dans le tableau I ci-après.

| COMPOSES | Composition A | Composition B | Composition C | Composition D | Composition E | Composition E' |
|---|---|---|---|---|---|---|
| PVC suspension SO 91(*) | 100 g | 100 g | 100 g | 100 g | 100 g | 100 g |
| Renforçateur de choc (KM 334 **) | 7 g | 7 g | 7 g | 7 g | 7 g | 7 g |
| Processing aid (K 120 ND ***) | 1,2 g | 1,2 g | 1,2 g | 1,2 g | 1,2 g | 1,2 g |
| Stéarate de Ca | 0,3 g | 0,3 g | 0,3 g | 0,3 g | 0,3 g | 0,3 g |
| Stéarate de Zn | 0,5 g | 0,5 g | 0,3 g | 0,3 g | 0,3 g | 0,3 g |
| Cire E **** | 0,2 g | 0,2 g | 0,2 g | 0,2 g | 0,2 g | 0,2 g |
| Alcool polyvinylique (4/125 *****) | 0,15 g | 0,15 g | 0,15 g | 0,15 g | 0,15 g | 0,15 g |
| Phosphite de di(isodécyle) et de phényle | 0,5 g | 0,5 g | 0,5 g | 0,5 g | 0,5 g | 0,5 g |
| $TiO_2$ | 4 g | 4 g | 4 g | 4 g | 4 g | 4 g |
| Ca $CO_3$ | 4 g | 4 g | 4 g | 4 g | 4 g | 4 g |
| Huile de ricin hydrogénée | 1,3 g | 1,3 g | 1,3 g | 1,3 g | 1,3 g | 1,3 g |
| β-dicétonate d'organo étain (******) | 0,5 g | 0,5 g | 0,5 g | 0,5 g | 0,5 g | 0 |
| Huile de soja époxydée | 0,75 g | 0,25 g | 0,75 g | 0,25 g | 0 | 1 |
| Dawsonite | 0,25 g | 0,75 g | 0,75 g | 0,75 g | 0,5 g | 0 |

TABLEAU I

* = PVC préparé en suspension : indice de viscosité = 91
K-wert = 60
** = copolymère méthacrylate/butadiène/styrène
*** = résine polyacrylique de haute masse moléculaire (> 1 000 000)
**** = lubrifiant à base d'ester de colophane
***** = alcool polyvinylique : indice d'ester = 125
viscosité en solution à 4 % dans l'eau = 4 mPa.s
****** = formule (II)

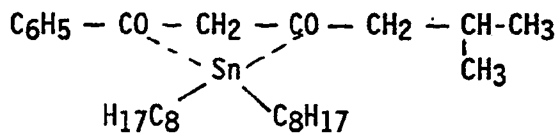

Point de ramollissement VICAT

(normes NF T 51-021, ISO 306, ASTM D 1525-76)

A partir des mélanges homogènes préparés comme indiqué précédemment, on prépare au moyen d'un malaxage sur mélangeur à cylindres, à une température de 180°C pendant 5 min, puis au moyen d'une presse à 185°C (2 min au contact, 2 min sous 2,1 MPa) des échantillons de 4 mm d'épaisseur environ.

Conditions VICAT :
- liquide : silicone
- poids : 1 kg
- vitesse de montée en température : 50°C/h

On obtient les points de ramollissement VICAT suivant:
- composition A : 80,5°C
- composition B : 81,9°C
- composition C : 81,1°C
- composition D : 81,8°C
- composition E : 81°C
- composition E' : 80,6°C

Stabilité thermique

La stabilité thermique (durée avant noircissement de l'échantillon) est déterminée à 180°C, pour chacune des compositions B, C, sur les échantillons de 4 mm préparés ci-avant.

On obtient les résultats suivants:
- composition A : 42 min
- composition B : 50 min
- composition C : 61 min
- composition D : 55 min
- composition E : 36 min
- composition E': 30 min

EXEMPLE 2

On prépare les formulations F, G, H et J qui sont détaillées dans le tableau II ci-après (les significations des termes définissant les composés sont celles qui ont été données pour le tableau I).

On opère les tests de mesure du point de ramollissement VICAT et de stabilité thermique comme décrit dans l'exemple 1.

| COMPOSES | Composition F | Composition G | Composition H | Composition J |
|---|---|---|---|---|
| PVC suspension SO 91 | 100 g | 100 g | 100 g | 100 g |
| Renforçateur de choc KM 334 | 7 g | 7 g | 7 g | 7 g |
| Processing aid K 120 ND | 1,2 g | 1,2 g | 1,2 g | 1,2 g |
| Stéarate de Ca | 0,3 g | 0,3 g | 0,3 g | 0,3 g |
| Stéarate de Zn | 0,4 g | 0,4 g | 0,4 g | 0,2 g |
| Cire E | 0,2 g | 0,2 g | 0,2 g | 0,2 g |
| Alcool polyvinylique | 0,15 g | 0,15 g | 0,15 g | 0,15 g |
| Phosphite de di(isodécyle) et de phényle | 0,5 g | 0,5 g | 0,5 g | 0,5 g |
| $TiO_2$ | 4 g | 4 g | 4 g | 4 g |
| Ca $CO_3$ | 4 g | 4 g | 4 g | 4 g |
| Huile de ricin hydrogénée | 1,3 g | 1,3 g | 1,3 g | 1,3 g |
| β-dicétonate d'organo étain de formule (II) | 1 g | 1 g | 1 g | 1 g |
| Huile de soja époxydée | 0,5 g | 0 | 0,5 g | 0,5 g |
| Dawsonite | 0,5 g | 0,5 g | 1 g | 0,5 g |
| Point de ramollissement VICAT | 80,4°C | 81°C | 81°C | 80,4°C |
| Stabilité thermique | 55 min | 55 min | 83 min | 69 min |

TABLEAU II

EXEMPLE 3

On prépare les formulations K, L, M et N qui sont détaillées dans le tableau III ci-après (les significations des termes définissant les composés sont celles qui ont été données pour le tableau I).

On opère les tests de mesure du point de ramollissement VICAT et de stabilité thermique comme décrit dans l'exemple 1.

| COMPOSES | Composition K | Composition L | Composition M | Composition N |
|---|---|---|---|---|
| PVC suspension SO 91 | 100 g | 100 g | 100 g | 100 g |
| Renforçateur de choc KM 334 | 7 g | 7 g | 7 g | 7 g |
| Processing aid K 120 ND | 1,2 g | 1,2 g | 1,2 g | 1,2 g |
| Stéarate de Ca | 0,3 g | 0,3 g | 0,3 g | 0,3 g |
| Stéarate de Zn | 0,5 g | 0,3 g | 0,3 g | 0,4 g |
| Cire E | 0,2 g | 0,2 g | 0,2 g | 0,2 g |
| Alcool polyvinylique | 0,15 g | 0,15 g | 0,15 g | 0,15 g |
| Phosphite de di(isodécyle) et de phényle | 0,5 g | 0,5 g | 0,5 g | 0,5 g |
| $TiO_2$ | 4 g | 4 g | 4 g | 4 g |
| Ca $CO_3$ | 4 g | 4 g | 4 g | 4 g |
| Huile de ricin hydrogénée | 1,3 g | 1,3 g | 1,3 g | 1,3 g |
| β-dicétonate d'organo étain de formule (II) | 1,5 g | 1,5 g | 1,5 g | 2 g |
| Huile de soja époxydée | 0,25 g | 0,75 g | 0,25 g | 0,5 g |
| Dawsonite | 0,75 g | 0,75 g | 0,75 g | 0,5 g |
| Point de ramollissement VICAT | 81,5°C | 81°C | 80,9°C | 80°C |
| Stabilité thermique | 68 min | 82 min | 72 min | 76 min |

TABLEAU III

**Revendications**

**1** - Compositions stabilisées à base de polymère chloré (PVC), caractérisées en ce qu'elle contiennent :

a) une quantité efficace de dawsonite,

b) une quantité efficace d'un β-dicétonate d'organo étain

c) une quantité efficace d'un composé organique du zinc,

d) une quantité efficace d'un composé organique du calcium, du magnésium, du baryum ou de lanthanides.

**2** - Compositions selon la revendication 1, caractérisées en ce que le polymère chloré est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

**3** - Compositions selon l'une des revendications 1 ou 2, caractérisées en ce que le β-dicétonate d'organoétain est choisi parmi les dérivés de diorgano-étain des β-dicétones, des poly β-dicétones, ainsi que des β-cétoaldéhydes, aromatiques, arylaliphatiques, aliphatiques et cycliques.

**4** - Compositions selon l'une des revendications 1 à 3, caractérisées en ce que le β-dicétonate d'organoétain est choisi parmi les β-dicétonates de dialkylétain IV, les 2 radicaux alkyles, identiques ou différents, étant linéaires ou ramifiés et ayant de 1 à 12 atomes de carbone.

**5** - Compositions selon la revendication 4, caractérisées en ce que le β-dicétonate de dialkylétain IV est choisi parmi les dérivés de diméthylétain IV, de dibutylétain IV et de dioctylétain IV du benzoylstéaroylméthane, du dibenzoylméthane, de la benzoylacétone, du benzoyl méthyl-3 butanoylméthane, des méthoxycarbonylbenzoyl-benzoylméthanes, des bis-β-dicétones telles que le bis(acétylacéto)-1,4 butane, le bis(benzoylacéto)-1,8 octane, le bis(acétylacéto)1,4 benzène.

**6** - Compositions selon l'une des revendications 1 à 5, caractérisées en ce qu'elles comportent de 0,005% à 5% en poids de β-dicétonate d'organoétain et éventuellement de β-dicétone libre, par rapport au poids du polymère chloré et de préférence de 0,01 % à 2 % en poids par poids.

**7** - Compositions selon l'une des revendications 1 à 6, caractérisées en ce que les composés organiques du zinc sont plus particulièrement les carboxylates et les phénolates de zinc.

**8** - Compositions selon l'une des revendications 1 à 7, caractérisées en ce que les composés organiques du calcium, du magnésium, du baryum et des lanthanides sont de préférence les carboxylates et les phénolates de ces métaux.

**9** - Compositions selon l'une des revendications 1 à 8, caractérisées en ce que :

– les composés organiques du zinc représentent de 0,005 % à 1 % en poids par rapport au polymère chloré, et de préférence de 0,01 % à 0,6 % en poids ;

– les composés organiques du calcium, du magnésium, du baryum et des lanthanides représentent de 0,005 % à 5 % en poids par rapport au poids du polymère chloré et de préférence de 0,02 % à 2 % en poids.

**10** - Compositions selon l'une des revendications 1 à 9, caractérisées en ce qu'elles contiennent de 0,005% à 5% en poids de dawsonite par rapport au poids du polymère chloré et préférentiellement de 0,01% à 2% en poids.

**11** - Compositions selon l'une des revendications 1 à 10, caractérisées en ce qu'elles contiennent une huile polyorganosiloxanique γ-hydroxy-alkylée de formule générale (I)

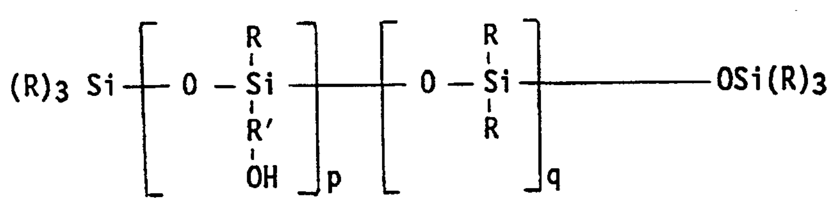

(I)

dans laquelle:

– les radicaux R, identiques ou différents, représentent un radical méthyle ou phényle, 60 % en moles au moins de radicaux R étant des radicaux méthyle,

– R' représente un radical alkylène, linéaire ou ramifié, ayant 2 à 6 atomes de carbone,

– p représente un nombre moyen de 1 à 30,

– q représente un nombre moyen de 1 à 100.

**12** - Compositions selon l'une des revendications 1 à 11, caractérisées en ce que l'huile polyorganosiloxanique est choisie parmi les huiles de formule (I) dans laquelle :
– R représente un radical méthyle ;
– R' représente un radical triméthylène ou méthyl-2 triméthylène ;
– p représente un nombre moyen de 2 à 20 ;
– q représente un nombre moyen de 2 à 30.

**13** - Compositions selon l'une des revendications 1 à 12, caractérisées en ce que l'huile polyorganosiloxanique représente de 0,005 % à 5 % en poids par rapport au poids du polymère chloré, et de préférence de 0,01 % à 2 % en poids.

**Revendications pour l'Etat contractant suivant: ES**

**1** - Procédé de stabilisation de polymère chloré, caractérisé en ce que l'on ajoute audit polymère :
a) une quantité efficace de dawsonite,
b) une quantité efficace d'un β-dicétonate d'organo étain
c) une quantité efficace d'un composé organique du zinc,
d) une quantité efficace d'un composé organique du calcium, du magnésium, du baryum ou de lanthanides.

**2** - Procédé selon la revendication 1, caractérisé en ce que le polymère chloré est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

**3** - Procédé selon l'une des revendications 1 ou 2, caractérisé en ce que le β-dicétonate d'organoétain est choisi parmi les dérivés de diorgano-étain des β-dicétones, des poly β-dicétones, ainsi que des β-cétoaldéhydes, aromatiques, arylaliphatiques, aliphatiques et cycliques.

**4** - Procédé selon l'une des revendications 1 à 3, caractérisé en ce que le β-dicétonate d'organoétain est choisi parmi les β-dicétonates de dialkylétain IV, les 2 radicaux alkyles, identiques ou différents, étant linéaires ou ramifiés et ayant de 1 à 12 atomes de carbone.

**5** - Procédé selon la revendication 4, caractérisé en ce que le β-dicétonate de dialkylétain IV est choisi parmi les dérivés de diméthylétain IV, de dibutylétain IV et de dioctylétain IV du benzoylstéaroylméthane, du dibenzoylméthane, de la benzoylacétone, du benzoyl méthyl-3 butanoylméthane, des méthoxycarbonylbenzoylbenzoylméthanes, des bis-β-dicétones telles que le bis(acétylacéto)-1,4 butane, le bis(benzoylacéto)-1,8 octane, le bis(acétylacéto)1,4 benzène.

**6** - Procédé selon l'une des revendications 1 à 5, caractérisé en ce que l'on utilise de 0,005 % à 5 % en poids de β-dicétonate d'organoétain et éventuellement de β-dicétone libre, par rapport au poids du polymère chloré et de préférence de 0,01 % à 2 % en poids par poids.

**7** - Procédé selon l'une des revendications 1 à 6, caractérisé en ce que les composés organiques du zinc sont plus particulièrement les carboxylates et les phénolates de zinc.

**8** - Procédé selon l'une des revendications 1 à 7, caractérisé en ce que les composés organiques du calcium, du magnésium, du baryum et des lanthanides sont de préférence les carboxylates et les phénolates de ces métaux.

**9** - Procédé selon l'une des revendications 1 à 8, caractérisé en ce que :
– les composés organiques du zinc utilisés représentent de 0,005 % à 1 % en poids par rapport au polymère chloré, et de préférence de 0,01 % à 0,6 % en poids ;
– les composés organiques du calcium, du magnésium, du baryum et des lanthanides utilisés représentent de 0,005 % à 5 % en poids par rapport au poids du polymère chloré et de préférence de 0,02 % à 2 % en poids.

**10** - Procédé selon l'une des revendications 1 à 9, caractérisé en ce que l'on utilise de 0,005 % à 5 % en poids de dawsonite par rapport au poids du polymère chloré et préférentiellement de 0,01 % à 2 % en poids.

**11** - Procédé selon l'une des revendications 1 à 10, caractérisé en ce que l'on utilise en outre une huile polyorganosiloxanique γ-hydroxy-alkylée de formule générale (I)

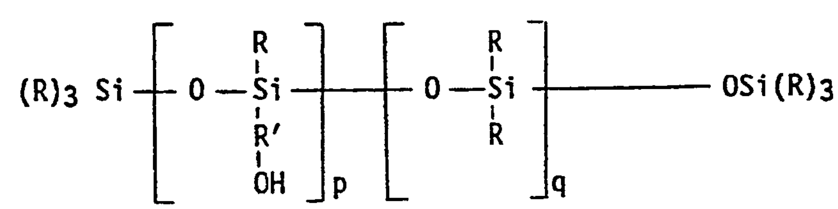

(I)

dans laquelle :

– les radicaux R, identiques ou différents, représentent un radical méthyle ou phényle, 60 % en moles au moins de radicaux R étant des radicaux méthyle,

– R' représente un radical alkylène, linéaire ou ramifié, ayant 2 à 6 atomes de carbone,

– p représente un nombre moyen de 1 à 30,

– q représente un nombre moyen de 1 à 100.

**12** - Procédé selon l'une des revendications 1 à 11, caractérisé en ce que l'huile polyorganosiloxanique est choisie parmi les huiles de formule (I) dans laquelle :

– R représente un radical méthyle ;

– R' représente un radical triméthylène ou méthyl-2 triméthylène ;

– p représente un nombre moyen de 2 à 20 ;

– q représente un nombre moyen de 2 à 30.

**13** - Procédé selon l'une des revendications 1 à 12, caractérisé en ce que l'huile polyorganosiloxanique utilisé représente de 0,005 % à 5 % en poids par rapport au poids du polymère chloré, et de préférence de 0,01 % à 2 % en poids.

Office européen des brevets

# RAPPORT DE RECHERCHE EUROPEENNE

Numero de la demande

EP 91 42 0122

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1420977 (BICC LIMITED)<br>* revendication 1 *<br>--- | 1 | C08K13/02<br>C08L57/08<br>//(C08K13/02,<br>3:26,5:09,<br>5:57) |
| A | CHEMICAL ABSTRACTS, vol. 90, no. 10, 05 mars 1979<br>Columbus, Ohio, USA<br>& JP-A-53129278 (TOKUYAMA SEKISUI KOGYO CO) 11-11-1978<br>page 37; ref. no. 72922H<br>* abrégé *<br>--- | 1 | |
| A,D | EP-A-0046161 (PHOENIX CHEMICAL CORPORATION)<br>* page 38, exemples 1-10 *<br>----- | 1 | |
| | | | DOMAINES TECHNIQUES RECHERCHES (Int. Cl.5) |
| | | | C08K<br>C08L |

Le présent rapport a été établi pour toutes les revendications

| Lieu de la recherche | Date d'achèvement de la recherche | Examinateur |
|---|---|---|
| LA HAYE | 22 JUILLET 1991 | HOFFMANN K.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)